# EUROPEAN PATENT APPLICATION

(11) **EP 4 382 979 A1**
(43) Date of publication of application: **12.06.2024**
(21) Application number: 22853025.9
(22) Date of filing: 01.08.2022
(51) Int. Cl.: G02B 6/255

(54) **FUSION SPLICER**

(30) Priority: 05.08.2021 JP 2021129081
(71) Applicant: SUMITOMO ELECTRIC INDUSTRIES, LTD., Osaka-shi, Osaka 541-0041 (JP)
(72) Inventor: MOURI, Shintaro, Osaka-shi, Osaka 541-0041 (JP); ENDO, Soichi, Osaka-shi, Osaka 541-0041 (JP); KIMURA, Akinori, Osaka-shi, Osaka 541-0041 (JP)
(74) Representative: Boult Wade Tennant LLP
(86) International application number: PCT/JP2022/029550
(87) International publication number: WO 2023/013606

(57) **Abstract**

A fusion splicer according to one embodiment includes an optical fiber holder holding an optical fiber, a rotation mechanism rotating the optical fiber holder around an axis extending along the optical fiber, a bending portion bending the optical fiber, a light source allowing light from the side of the optical fiber to be incident on the optical fiber bent by the bending portion, and a power supply unit supplying power to the light source. A tip of the optical fiber protrudes from an end of the optical fiber holder, and the rotation mechanism is disposed on the opposite side of the end of the optical fiber holder in the axial direction extending along the optical fiber. The bending portion and the light source are disposed on the opposite side of the optical fiber holder interposing the rotation mechanism in the axial direction. The bending portion includes a bending adjustment unit adjusting a bending amount of the optical fiber.

## Description

### Technical Field

The present disclosure relates to fusion splicers.

This application claims priority based on Japanese Application No. 2021-129081 dated August 5, 2021, the entire contents of which are incorporated herein by reference.

### Background Art

Patent Literature 1 describes a fusion splicing device. The fusion splicing device includes a pair of V-groove stands on which each of the pair of optical fibers is disposed, an LED lamp disposed on each side of the pair of optical fibers, and a first television camera and a second television camera that images the pair of optical fibers. The LED lamp allows light to be incident on the optical fiber from the side of the optical fiber. Light incident on the optical fiber from the side is emitted from the end face of the optical fiber. The first television camera and the second television camera capture an image of the end face of the optical fiber that emits light.

Patent Literature 2 describes an optical fiber splicing device. The splicing device splices a pair of photonic crystal fibers (PCF) to each other. The splicing device includes two holding members holding each of the two PCFs, a first driving unit that moves each holding member, a mirror located between the two PCFs, and a camera capturing images reflected in the mirrors. In the splicing device, light is irradiated onto the PCF from the camera by using vertical illumination. In the state where the entire end face of the PCF is illuminated by this light irradiation, the core of the end face is observed.

### Citation List

### Patent Literature

Patent Literature 1: International Publication WO 2013/077002
Patent Literature 2: Japanese Unexamined Patent Publication No. 2004-53625

### Summary of Invention

A fusion splicer according to the present disclosure includes an optical fiber holder holding an optical fiber, a rotation mechanism rotating the optical fiber holder around an axis extending along the optical fiber, a bending portion bending the optical fiber, a light source allowing light from the side of the optical fiber to be incident on the optical fiber bent by the bending portion, and a power supply unit supplying power to the light source. A tip of the optical fiber protrudes from an end of the optical fiber holder, and the rotation mechanism is disposed on the opposite side of the end of the optical fiber holder in the axial direction extending along the optical fiber. The bending portion and the light source are disposed on the opposite side of the optical fiber holder interposing the rotation mechanism in the axial direction. The bending portion includes a bending adjustment unit adjusting a bending amount of the optical fiber.

### Brief Description of Drawings

FIG. 1 is a diagram schematically illustrating a fusion splicer according to an embodiment.
FIG. 2 is a side view schematically illustrating an optical fiber holder, a rotation mechanism, a bending portion, and a light source of the fusion splicer according to the embodiment.
FIG. 3 is a perspective view schematically illustrating an optical fiber holder, a rotation mechanism, a bending portion, and a light source of the fusion splicer according to the embodiment.
FIG. 4 is a diagram schematically illustrating a bending portion, a light source, and an optical fiber of the fusion splicer according to the embodiment.
FIG. 5 is a diagram schematically illustrating a bending portion, a light source, and an optical fiber of the fusion splicer according to the embodiment.
FIG. 6 is a diagram schematically illustrating a bending portion, a light source, and an optical fiber of the fusion splicer according to the embodiment.
FIG. 7 is a side view schematically illustrating an optical fiber holder, a rotation mechanism, a bending portion, and a light source of the fusion splicer according to Modified Example.
FIG. 8 is a perspective view schematically illustrating an optical fiber holder, a rotation mechanism, a bending portion, and a light source of the fusion splicer according to Modified Example.
FIG. 9 is a diagram schematically illustrating a bending portion, a light source, and an optical fiber of a fusion splicer according to Modified Example.
FIG. 10 is a diagram schematically illustrating a bending portion, a light source, and an optical fiber of a fusion splicer according to Modified Example.
FIG. 11 is a diagram schematically illustrating a bending portion, a light source, and an optical fiber of a fusion splicer according to Modified Example.

### Description of Embodiments

In the method in which a light source such as the above-described vertical illumination irradiates an optical fiber to allow the end face of the optical fiber to be illuminated, in some case, it may be difficult to accurately specify the positions of the core, clad, and marker. When illuminating the end face of an optical fiber, if the power of the light source is not allowed to be increased, and thus, the light amount necessary to specify the positions of the core, clad, and marker cannot be obtained, and the end face of the optical fiber may not be illuminated sufficiently.

An object of the present disclosure is to provide a fusion splicer that can suppress the power of a light source and illuminate the end face of an optical fiber sufficiently.

### [Description of Embodiments of Present Disclosure]

First, the contents of the embodiments of the present disclosure will be listed and described. A fusion splicer according to an embodiment of the present disclosure includes: (1) an optical fiber holder holding an optical fiber, a rotation mechanism rotating the optical fiber holder around an axis extending along the optical fiber, a bending portion bending the optical fiber, a light source allowing light from the side of the optical fiber to be incident on the optical fiber bent by the bending portion, and a power supply unit supplying power to the light source. The tip of the optical fiber protrudes from the end of the optical fiber holder, and the rotation mechanism is disposed on the opposite side of the end of the optical fiber holder in the axial direction extending along the optical fiber. The bending portion and the light source are disposed on the opposite side of the optical fiber holder interposing the rotation mechanism in the axial direction. The bending portion includes a bending adjustment unit adjusting a bending amount of the optical fiber.

In this fusion splicer, the optical fiber holder holds the optical fiber with the tip of the optical fiber protruding. The rotation mechanism rotating the optical fiber holder is disposed on the opposite side of the tip of the optical fiber holder. The fusion splicer includes the bending portion bending the optical fiber, and the light source allowing light from the side of the optical fiber to be incident on the optical fiber bent by the bending portion. The light source receives power from the power supply unit and emits light. The term "power supply unit" refers to a unit supplying power to the light source, and refers to, for example, a portion of the fusion splicer electrically connected to the light source. The "power supply unit" may also be a wiring portion of the fusion splicer connected to the power source (as an example, a household power source or an outlet) when it is driven by, for example, an AC power source (when the fusion splicer doesn't have a battery or fuel cell). When the fusion splicer has a battery or a fuel cell, the "power supply unit" may be a wiring portion inside the fusion splicer connected to the battery or the fuel cell. The fusion splicer may have its own battery or fuel cell connected to a power supply unit supplying power the light source. The bending portion bending the optical fiber and the light source are disposed on the opposite side of the optical fiber holder when viewed from the rotation mechanism. The bending portion includes a bending adjustment unit adjusting the bending amount of the optical fiber. When the power of the light source is strong and the light amount at the end face of the optical fiber is too strong, the bending adjustment unit reduces the bending amount, and when the power of the light source is weak and the light amount at the end face is too weak, since the bending adjustment unit can adjust the bending amount to increase the bending amount, the light amount at the end face can be adjusted by adjusting the bending amount according to the light source. Therefore, even if the power of the light source is not strong, the end face of the optical fiber can be sufficiently illuminated. As a result, the position of the core can be specified with high accuracy.

(2) In the above (1), the fusion splicer may further include a light source adjustment unit adjusting the power supplied to the light source. In this case, since the power of the light source can be adjusted by the light source adjustment unit, the light amount reaching the end face of the optical fiber can be adjusted more finely.

(3) In (1) or (2) above, the optical fiber holder may include a pressure adjustment unit adjusting the pressure applied to the optical fiber. In this case, the pressure adjustment unit adjusts the pressure on the optical fiber, so that it is possible to adjust the light amount to the end face of the optical fiber holder. As a result, the range of adjustment of the light amount to the end face can be expanded.

(4) In any one of (1) to (3) above, the fusion splicer may include a reflection portion reflecting light from the light source toward the optical fiber. In this case, since the light from the reflection portion is incident on the optical fiber, even if the power of the light source is small, the end face can be more sufficiently illuminated.

(5) In any one of (1) to (4) above, the fusion splicer may include a holder stand with the optical fiber holder mounted on. The optical fiber holder may be detachable from the holder stand. In this case, the fusion splicer includes the holder stand, and the optical fiber holder is detachable from the holder stand. Since the optical fiber holder is detachable from the holder stand, the optical fiber can be easily attached to and detached from the rotation mechanism.

### [Details of Embodiments of Present Disclosure]

A specific example of a fusion splicer according to an embodiment of the present disclosure will be described. In the description of the drawings, the same or corresponding elements are denoted by the same reference numerals, and redundant description will be omitted as appropriate. In addition, some portions of the drawings may be simplified or exaggerated for ease of understanding, and the dimensional ratios and the like are not limited to those illustrated in the drawings.

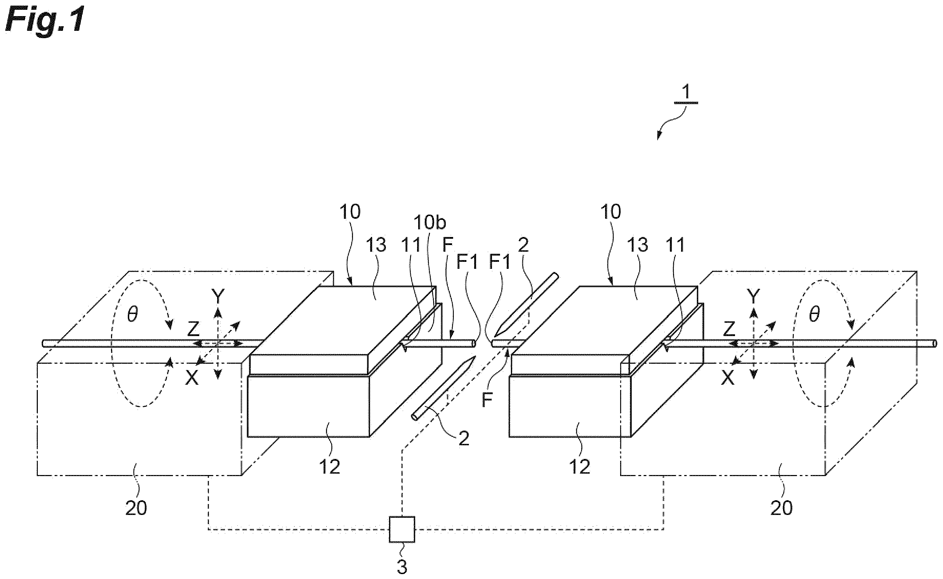

First, the configuration of the fusion splicer according to this embodiment will be described with reference to FIG. 1. FIG. 1 is a diagram illustrating an overview of the fusion splicer according to this embodiment. As illustrated in FIG. 1, the fusion splicer 1 fusion-splices a pair of optical fibers F to each other. The fusion splicer 1 includes an optical fiber holder 10 having a V-groove 11 and a rotation mechanism 20 rotating the optical fiber holder 10. The axes of the pair of optical fibers F coincide with each other. The "axis" refers to the center line of the optical fiber passing through the center of the optical fiber and extending along the extending direction of the optical fiber.

The optical fiber holder 10 and the rotation mechanism 20 are arranged along the axial direction, which is the direction in which the axis of the optical fiber F extends. When an XYZ three-dimensional orthogonal coordinate system is set and the axis of the optical fiber is set as the Z-axis, the axial direction of the optical fiber F is the Z-axis direction. The fusion splicer 1 includes a pair of optical fiber holders 10 lined up along the Z-axis direction, which is the direction in which each of the pair of optical fibers F extends, and a pair of the rotation mechanisms 20 lined up along the Z-axis direction. In the V-groove 11 of each optical fiber holder 10, the optical fiber F to be fusion-spliced is positioned. The optical fiber holder 10 is made of, for example, resin. The optical fiber holder 10 holds, for example, a coated portion of the optical fiber F. The optical fiber holder 10 holds the optical fiber F with a tip F1 protruding in the Z-axis direction. The optical fiber holder 10 has an end portion 10b from which the optical fiber F protrudes. The tip F1 of the optical fiber F protrudes from the end portion 10b of the optical fiber holder 10. The rotation mechanism 20 is disposed on the opposite side of the optical fiber holder 10 from the end portion 10b in the axial direction.

A pair of discharge electrodes 2 are arranged at positions where the tips F1 of the pair of optical fibers F face each other. The pair of discharge electrodes 2 are arranged at positions facing each other along a direction intersecting the optical fiber F (for example, the X-axis direction). The optical fiber holder 10 includes, for example, a stand 12 in which a V-groove 11 extending along the Z-axis direction is formed and on which the optical fiber F is disposed and a lid 13 disposed on the stand 12. The stand 12 and the lid 13 are arranged, for example, along the Y-axis direction intersecting both the X-axis direction and the Z-axis direction.

The pair of discharge electrodes 2 fusion-splice the tips F1 of the pair of optical fibers F to each other by discharge. For example, the fusion splicer 1 has a control unit 3 controlling each portion of the fusion splicer 1. By controlling the discharge current and discharge time of the discharge electrode 2 by the control unit 3, fusion-splicing is performed under fusion conditions suitable for the type of optical fiber F. In the fusion splicer 1, the control unit 3 performs positioning for the pair of optical fibers F.

The control unit 3 adjusts the position of each optical fiber F in the X-axis direction and the Y-axis direction, and also aligns the axes of the pair of optical fibers F so that the pair of optical fibers F are arranged in a straight line along the Z-axis direction. That is, the control unit 3 aligns the pair of optical fibers F in the X-axis direction, Y-axis direction, and Z-axis direction. The control unit 3 controls the rotation mechanism 20 to rotate the optical fiber F around an axis extending along the center of the optical fiber F (same as the Z axis in the drawings), so that the optical fiber F is aligned in the θ direction.

The optical fiber F is, for example, an optical fiber requiring rotational alignment in the fusion splicer 1. The optical fibers F are optical fibers in which the positions of the core, clad, marker, and the like of the pair of optical fibers F in the θ direction need to be aligned. For example, the optical fiber F is a multi core fiber (MCF) or a polarization maintaining fiber (PMF).

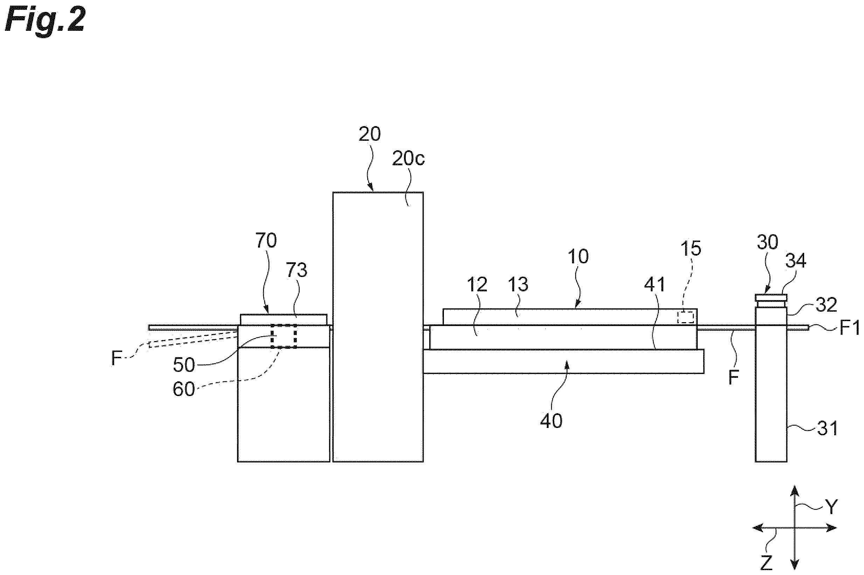

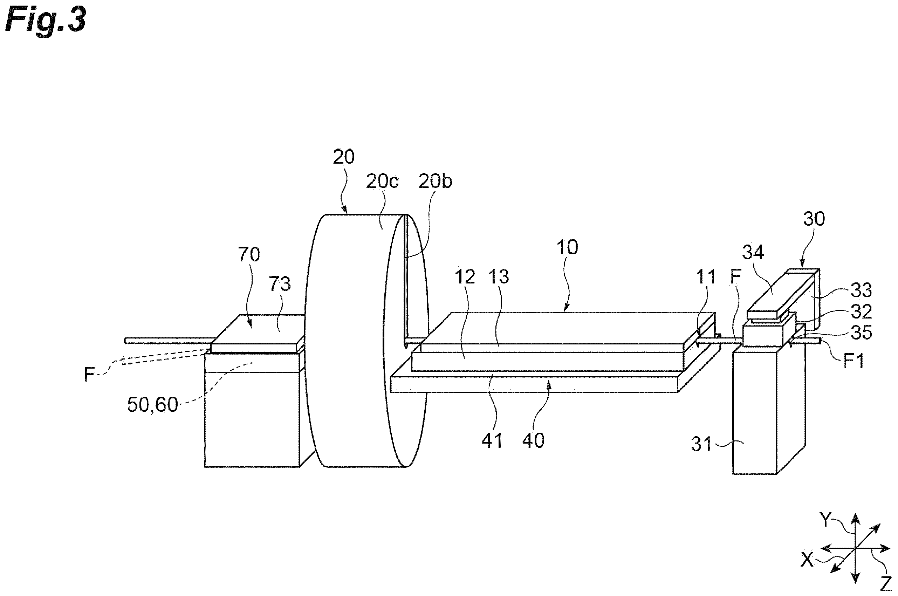

FIG. 2 is a side view illustrating the optical fiber holder 10 and the rotation mechanism 20 of the fusion splicer 1. FIG. 3 is a perspective view illustrating the optical fiber holder 10 and the rotation mechanism 20 of the fusion splicer 1. As illustrated in FIGS. 2 and 3, the fusion splicer 1 according to the present embodiment includes a clamp portion 30 pressing the tip F1 side portion of the optical fiber F held in the optical fiber holder 10, a holder stand 40 fixed to a rotation mechanism 20, a bending portion 50 bending the optical fiber F, and a light source 60.

The portion of the optical fiber F pressed by the clamp portion 30 is, for example, a coated portion of the optical fiber F. In this case, only the portion of the optical fiber F protruding from the clamp portion 30 is the portion from which the coating is detached. However, the portion pressed by the clamp portion 30 may be a portion of the optical fiber F from which the coating is detached (for example, a portion of the optical fiber F where the glass is exposed). The length of the portion of the optical fiber F protruding from the clamp portion 30 is, for example, 5 mm or less. The size of force with which the clamp portion 30 presses the optical fiber F is a size to the extent not to inhibit the rotation of the optical fiber F.

The holder stand 40 is made of, for example, metal. The holder stand 40 has a mounting surface 41 on which the optical fiber holder 10 is mounted. For example, the optical fiber holder 10 is detachable from the holder stand 40. In this case, the optical fiber holder 10 detached from the holder stand 40 holds the optical fiber F, and the optical fiber holder 10 held by the optical fiber F can be mounted on the holder stand 40. The optical fiber holder 10 can be replaced with an appropriate V-groove 11 according to the diameter (coating diameter or glass diameter) of the optical fiber F.

The holder stand 40 extends from the rotation mechanism 20 in the Z-axis direction. The rotation mechanism 20 is disposed on the opposite side of the tip F1 (end face) when viewed from the optical fiber holder 10. The rotation mechanism 20 has, for example, a recess 20b into which the optical fiber F is inserted along the Y-axis direction. The recess 20b has a slit shape recessed from the outer peripheral surface 20c of the rotation mechanism 20 along the Y-axis direction. The rotation mechanism 20 rotates the optical fiber F together with the holder stand 40 and the optical fiber holder 10, for example, around an axis extending along the center of the optical fiber F, that is, an axis parallel to the Z axis.

The rotation mechanism 20 includes, for example, a motor (not illustrated) and a gear (not illustrated). In this case, the motor of the rotation mechanism 20 is driven and the rotational driving force of the motor is transmitted to the holder stand 40 and the optical fiber holder 10 via the gear, so that the holder stand 40 and the optical fiber holder 10 are rotated. The optical fiber F is inserted into the recess 20b of the rotation mechanism 20 and is held by the optical fiber holder 10. As the optical fiber holder 10 is rotated by the rotation mechanism 20, the optical fiber F also rotates.

The clamp portion 30 is provided to hold the optical fiber F protruding from the optical fiber holder 10. The clamp portion 30 includes, for example, a stand 31 with the optical fiber F disposed on, and a lid 32 covering the optical fiber F disposed on the stand 31. The clamp portion 30 holds the optical fiber F extending from the optical fiber holder 10 in the Z-axis direction by interposing the optical fiber F between the stand 31 and the lid 32.

A V-groove 35 on which the optical fiber F is disposed is formed in the stand 31, and the optical fiber F disposed on the V-groove 35 is covered by the lid 32. For example, the clamp portion 30 includes a first extension portion 33 extending from the stand 31 in the Y-axis direction and a second extension portion 34 extending from the end of the first extension portion 33 on the opposite side of the stand 31 in the width direction of the holder stand 40 (in the X-axis direction). The lid 32 is provided between the second extension portion 34 and the stand 31.

The fusion splicer 1 includes a bending portion 50 bending the optical fiber F and a light source 60 allowing light from the side of the optical fiber F (for example, a direction intersecting the Z-axis direction) to be incident on the optical fiber F bent by the bending portion 50. The bending portion 50 and the light source 60 are disposed on the opposite side of the optical fiber holder 10 when viewed from the rotation mechanism 20. The bending portion 50 and the light source 60 are disposed adjacent to the rotation mechanism 20.

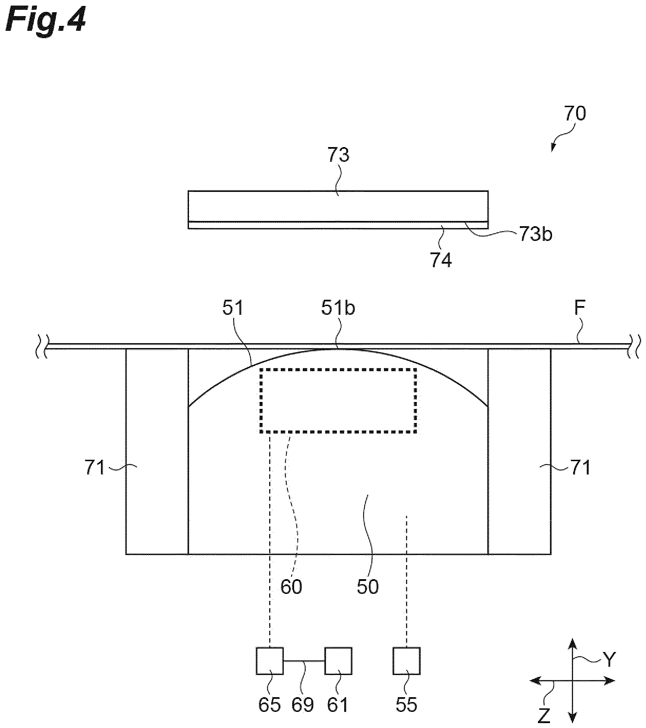

The bending portion 50 is a portion where the optical fiber F is bent. The bending portion 50 may be a portion pressing the optical fiber F to bend the surface of the optical fiber F. FIG. 4 is a diagram schematically illustrating the bending portion 50 and the light source 60. As illustrated in FIG. 4, the bending portion 50 and the light source 60 are provided, for example, in a bending mechanism 70 bending the optical fiber F.

The bending mechanism 70 includes a support portion 71 with the optical fiber F disposed on, a bending portion 50, and a lid portion 73 covering the optical fiber F disposed on the bending portion 50. The support portion 71 supports the optical fiber F to be bent. As an example, the bending portion 50 has a convex surface 51 on which a top portion 51b on which the optical fiber F is disposed is formed. The convex surface 51 is, for example, a curved surface. For example, the bending portion 50 moves relative to the support portion 71 while the optical fiber F is disposed thereon. The bending mechanism 70 has, for example, a pair of support portions 71 lined up along the Z-axis direction, and the bending portion 50 is provided between the pair of support portions 71. The pair of support portions 71 support portions of the bending portion of the optical fiber F on both end sides in the Z-axis direction. The bending portion 50 is movable, for example, along the Y-axis direction.

For example, the light source 60 is built into the bending portion 50. The light source 60 is a light source for observing the end face of the tip F1 of the optical fiber F. The light source 60 allows light to be incident on the optical fiber F bent by the bending portion 50 from the side (for example, in a direction intersecting the Z-axis direction). By allowing the light from the light source 60 to be laterally incident on a portion bent of the optical fiber F, the core at the end face of the optical fiber F can be observed.

As an example, light source 60 is an LED light source. For example, the fusion splicer 1 includes a power source 61, and the light source 60 receives power from the power source 61 via a power supply unit 69 and emits light. For example, the bending mechanism 70 includes a light source adjustment unit 65 adjusting the power (for example, current) supplied to the light source 60. For example, the light source adjustment unit 65 adjusts the power received from the power supply unit 69 and supplies the adjusted power to the light source 60. Therefore, the power of the light source 60 can be adjusted. As a result, the intensity of the light incident on the optical fiber F can be adjusted, and the light amount reaching the end face of the optical fiber F can be adjusted more finely.

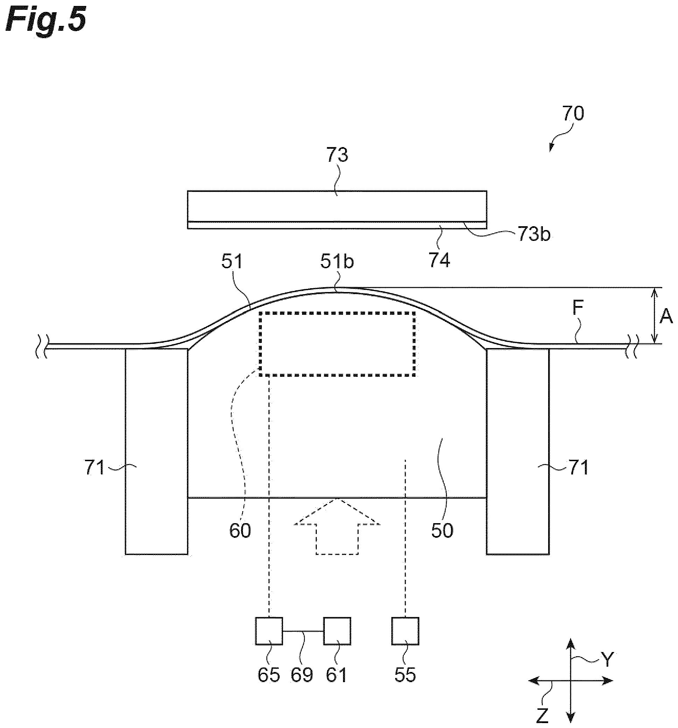

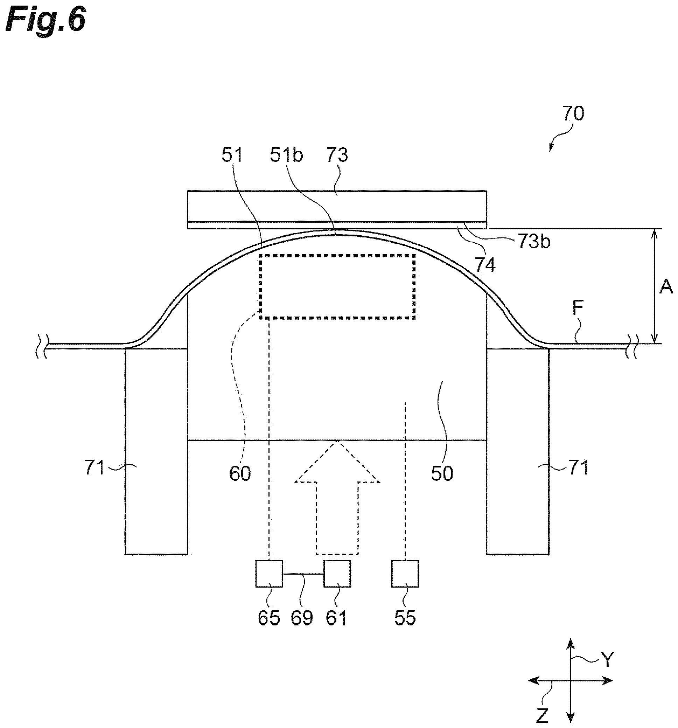

The lid portion 73 has a reflection portion 74 reflecting the light from the light source 60 toward the optical fiber F. The reflection portion 74 is provided, for example, on a surface 73b of the lid portion 73 facing the bending portion 50 (light source 60). The reflection portion 74 is, for example, a mirror attached to the surface 73b. However, the reflection portion 74 may be other than a mirror, and may be, for example, a mirror-polished portion of the lid portion 73. By providing the reflection portion 74 in this manner, the coupling efficiency of light to the optical fiber F can be increased. Incidentally, the light amount of light incident from the side on the optical fiber F increases as a bending amount A (refer to FIGS. 5 and 6) of the optical fiber F increases. The bending amount refers to the amount by which the optical fiber is bent in a direction intersecting the extending direction of the optical fiber. For example, the bending amount A indicates a distance from the un-bending portion of the optical fiber F to the end of the bending portion in the intersecting direction (Y-axis direction in the examples of FIGS. 5 and 6). The bending portion 50 according to this embodiment includes a bending adjustment unit 55 adjusting the bending amount A for the optical fiber F. The bending adjustment unit 55 moves the bending portion 50, for example, along a direction toward and away from the lid portion 73 (Y-axis direction).

FIGS. 5 and 6 illustrate an example of a state in which the bending amount A of the optical fiber F is adjusted by the bending adjustment unit 55. As illustrated in FIGS. 5 and 6, the bending adjustment unit 55 adjusts the bending amount A of the optical fiber F by moving the bending portion 50 relative to the support portion 71. For example, the bending adjustment unit 55 allows the bending portion 50 to be closer to the lid portion 73 to increase the bending amount A of the optical fiber F, and the bending adjustment unit 55 allows the bending portion 50 to be separated from the lid portion 73 to reduce the bending amount A of the optical fiber F.

For example, as illustrated in FIG. 2, the optical fiber holder 10 has a pressure adjustment unit 15 adjusting the pressure on the optical fiber F. The pressure adjustment unit 15 adjusts the pressing force on, for example, the optical fiber F. In the optical fiber holder 10, when the pressing force on the optical fiber F is reduced, leakage light is reduced, and the end face of the optical fiber F becomes brighter. Adjustment of the pressing force on the optical fiber F by the pressure adjustment unit 15 may be performed in the same manner as, for example, the bending adjustment unit 55, or may be performed by using magnetic force.

Next, an example of a method for observing the end face of the optical fiber F by using the bending portion 50 and the light source 60 will be described. First, the optical fiber F is disposed in the clamp portion 30, the optical fiber holder 10, the rotation mechanism 20, and the bending mechanism 70. Then, the rotation mechanism 20 rotates the optical fiber F, the bending portion 50 bends the optical fiber F, and the light source 60 allows light to be incident on the optical fiber F. In this state, the illuminated end face of the optical fiber F is observed.

When the optical fiber holder 10 has the pressure adjustment unit 15, the end face of the optical fiber F may be observed by the following method. Specifically, the optical fiber holder 10 holds the optical fiber F, and the rotation mechanism 20 rotates the optical fiber F before the optical fiber F is bent by the bending portion 50. After that, the bending portion 50 bends the optical fiber F, the light source 60 allows light to be incident on the optical fiber F, and the pressure adjustment unit 15 weakens the pressing force on the optical fiber F. By weakening the pressing force on the optical fiber F by the pressure adjustment unit 15, the brightly illuminated end face of the optical fiber F is observed.

Next, the functions and effects obtained from the fusion splicer 1 according to this embodiment will be explained. In the fusion splicer 1, the optical fiber holder 10 holds the optical fiber F with the tip F1 of the optical fiber F protruding. The rotation mechanism 20 rotating the optical fiber holder 10 is disposed on the opposite side of the tip F1 of the optical fiber holder 10. The fusion splicer 1 includes a bending portion 50 bending the optical fiber F, and a light source 60 allowing light from the side of the optical fiber F to be incident on the optical fiber F bent by the bending portion 50.

The bending portion 50 bending the optical fiber F and the light source 60 are disposed on the opposite side of the optical fiber holder 10 when viewed from the rotation mechanism 20. The bending portion 50 has a bending adjustment unit 55 adjusting the bending amount A with respect to the optical fiber F. Therefore, when the power of the light source 60 is strong and the light amount at the end face of the optical fiber F is too strong, the bending adjustment unit 55 reduces the bending amount A, and when the power of the light source 60 is weak and the light amount at the end face is too weak, the bending adjustment unit 55 can adjust the bending amount A to increase the bending amount A. By adjusting the bending amount A according to the light source 60, the light amount at the end face can be adjusted. Therefore, even if the power of the light source 60 is not strong, the end face of the optical fiber F can be sufficiently illuminated. As a result, the position of the core can be specified with high accuracy.

The fusion splicer 1 may include a light source adjustment unit 65 adjusting the power supplied to the light source 60. In this case, since the power of the light source 60 can be adjusted by the light source adjustment unit 65, the light amount reaching the end face of the optical fiber F can be adjusted more finely.

The optical fiber holder 10 may include a pressure adjustment unit 15 adjusting the pressure on the optical fiber F. In this case, the pressure adjustment unit 15 adjusts the pressure on the optical fiber F, so that it is possible to adjust the light amount to the end face of the optical fiber holder 10. As a result, the range of adjustment of the light amount to the end face can be expanded.

The fusion splicer 1 may include a reflection portion 74 reflecting the light from the light source 60 toward the optical fiber F. In this case, since the light from the reflection portion 74 is incident on the optical fiber F, even if the power of the light source 60 is small, the end face can be more sufficiently illuminated.

The fusion splicer 1 may include the holder stand 40 with the optical fiber holder 10 mounted on. The optical fiber holder 10 may be detachable from the holder stand 40. In this case, the fusion splicer 1 includes the holder stand 40, and the optical fiber holder 10 is detachable from the holder stand 40. Since the optical fiber holder 10 is detachable from the holder stand 40, the optical fiber F can be easily attached to and detached from the rotation mechanism 20.

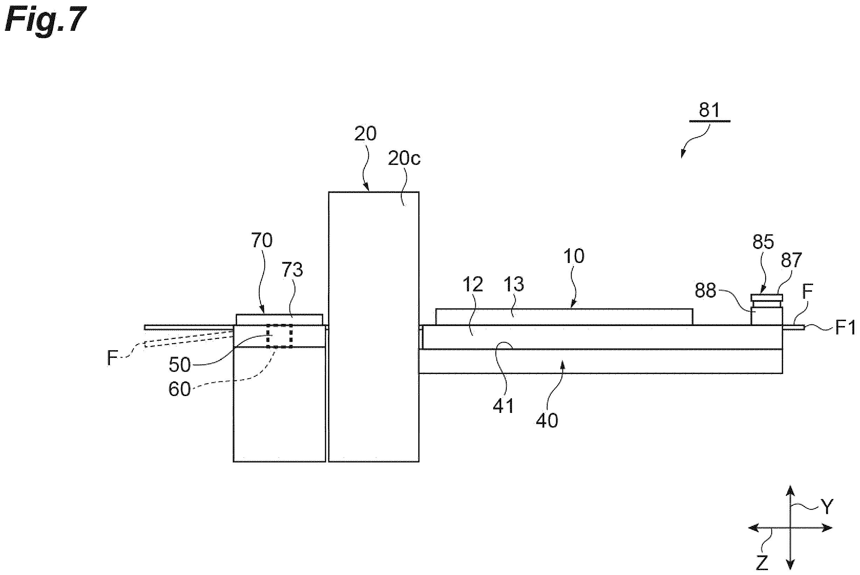

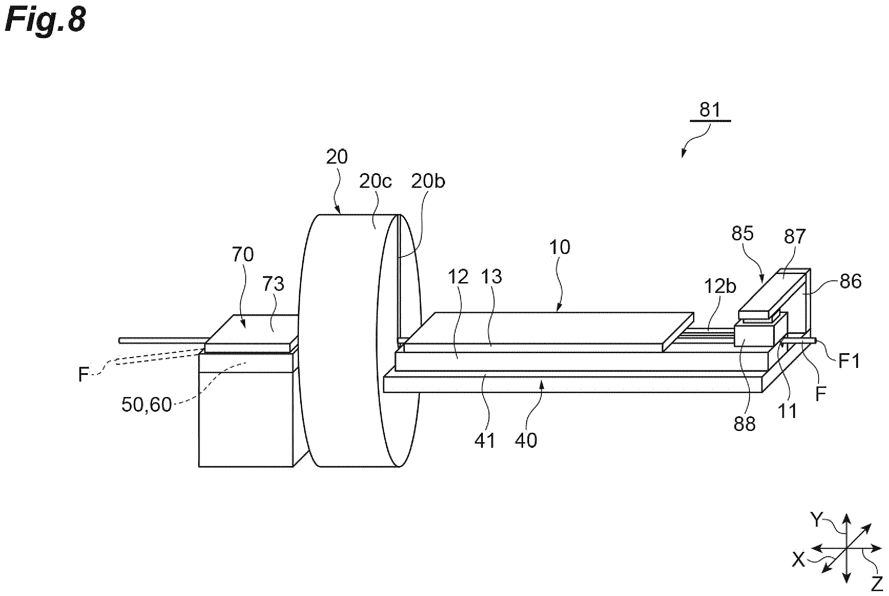

Next, a fusion splicer 81 according to Modified Example 1 will be described with reference to FIGS. 7 and 8. Since a portion of the configuration of the fusion splicer 81 is the same as a portion of the configuration of the fusion splicer 1 described above, the same description with the configuration of the fusion splicer 1 below will be omitted as appropriate with the same reference numerals denoted. The fusion splicer 81 includes a clamp portion 85 integrated with the holder stand 40 instead of the clamp portion 30 described above.

For example, the length of the stand 12 of the optical fiber holder 10 in the Z-axis direction is longer than the length of the lid 13 of the optical fiber holder 10 in the Z-axis direction. For example, the stand 12 extends toward the opposite side of the rotation mechanism 20 from the lid 13. In this case, the stand 12 has a V-groove exposed portion 12b in which a portion of the V-groove 11 is exposed on the side opposite to the rotation mechanism 20. The optical fiber F disposed on the V-groove 11 exposed in the V-groove exposed portion 12b is held by the clamp portion 85.

The rotation mechanism 20 rotates the optical fiber F together with the holder stand 40, the optical fiber holder 10, and the clamp portion 85, for example, around an axis extending along the center of the optical fiber F. The clamp portion 85 includes, for example, a fixing portion 86 extending in the Y-axis direction from the holder stand 40, an extension portion 87 extending in the width direction of the holder stand 40 from the end of the fixing portion 86 on the opposite side of the holder stand 40, and a lid portion 88 interposed between the extension portion 87 and the stand 12. The lid portion 88 covers the optical fiber F disposed on the V-groove 11 of the stand 12. The fusion splicer 81 has been described above. Since the fusion splicer 81 includes the bending portion 50 and the light source 60, the same functions and effects as the fusion splicer 1 described above can be obtained from the fusion splicer 81.

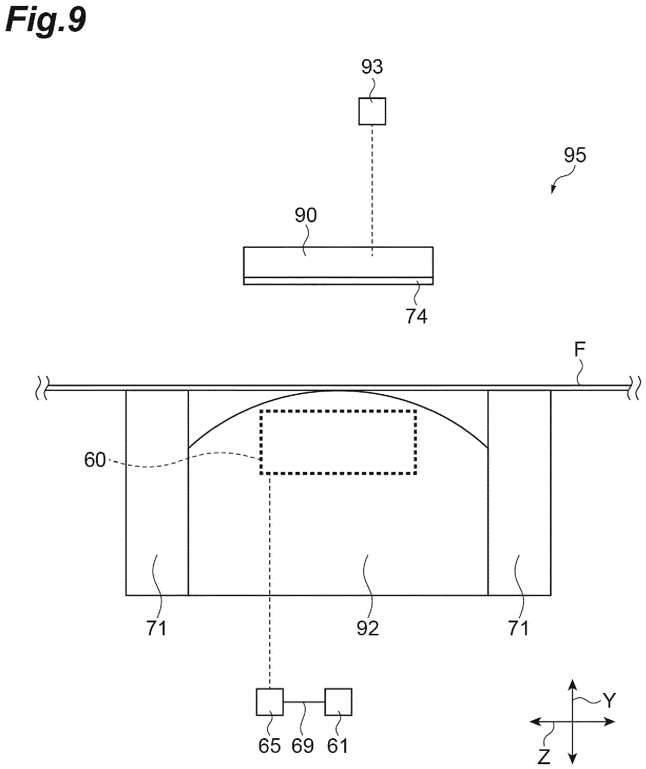

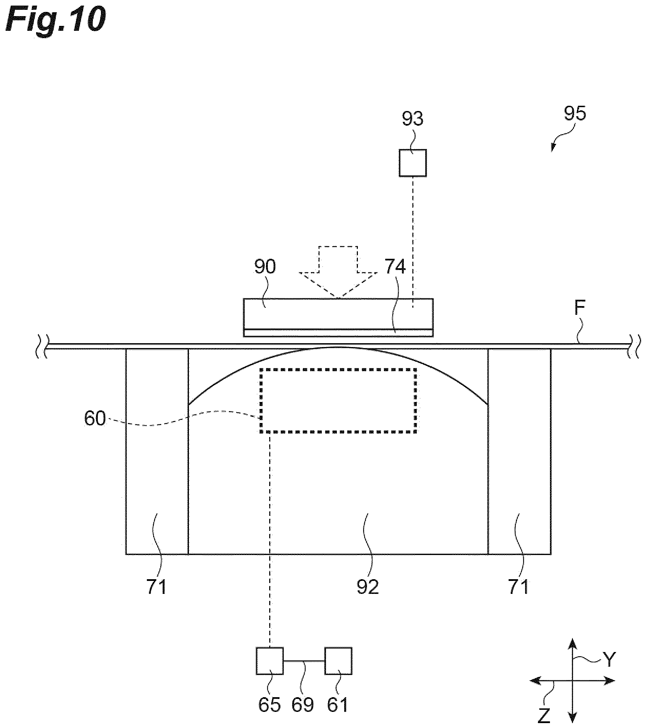

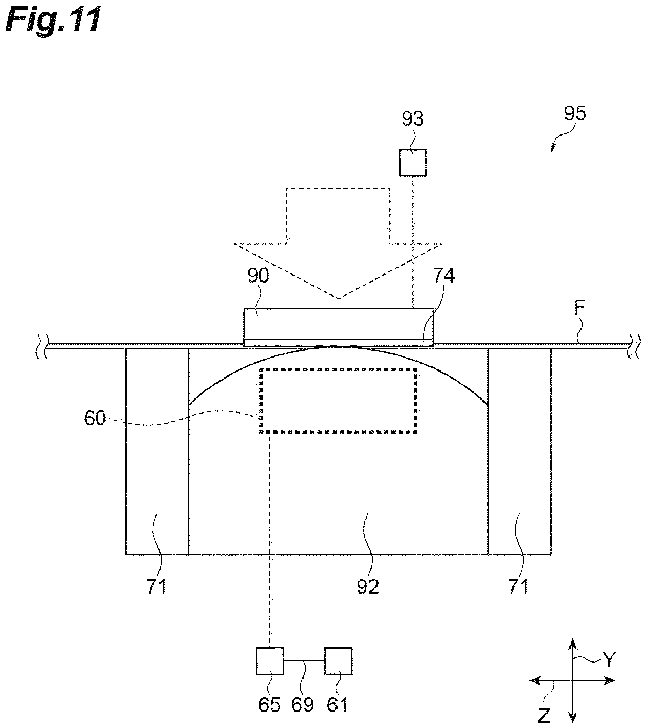

Next, a fusion splicer according to Modified Example 2 will be described with reference to FIGS. 9, 10, and 11. The fusion splicer according to Modified Example 2 includes a bending portion 90 and a bending mechanism 95 different from the bending portion 50 and the bending mechanism 70. The bending mechanism 95 includes a support portion 71 and a mounting portion 92 on which the optical fiber F is disposed. The bending portion 90 is a lid portion covering the optical fiber F disposed on the mounting portion 92. The bending portion 90 is movable, for example, along the Y-axis direction.

For example, the bending portion 90 includes a reflection portion 74, similar to the lid portion 73 described above. The bending portion 90 has a bending adjustment unit 93 adjusting the bending amount of the optical fiber F. The bending adjustment unit 93 moves the bending portion 90 along a direction toward and away from the mounting portion 92. The bending adjustment unit 93 adjusts the bending amount of the optical fiber F by adjusting the pressing force applied from the bending portion 90 to the optical fiber F disposed on the mounting portion 92. The bending adjustment unit 93 increases the bending amount on the surface of the optical fiber F by increasing the pressing force from the bending portion 90 on the optical fiber F, and decreases the bending amount on the surface of the optical fiber F by weakening the pressing force.

As described above, in the fusion splicer according to Modified Example 2, the optical fiber F is bent by pressing the optical fiber F with the bending portion 90, which is the lid portion. In this fusion splicer, since the bending amount of the optical fiber F by the bending portion 90 is adjusted by the bending adjustment unit 93, the light amount at the end face can be adjusted by adjusting the bending amount according to the light source 60. Since the end face of the optical fiber F can be sufficiently illuminated even if the power of the light source 60 is not strong, the same functions and effects as those of the fusion splicer 1 described above can be obtained.

Heretofore, the fusion splicer according to the embodiment and various modified examples has been described above. However, the present invention is not limited to the embodiments or modified examples described above. That is, those skilled in the art will readily recognize that various modifications and changes can be made within the scope of the spirit disclosed in the claims of the present invention. The configuration of each portion of the fusion splicer can be modified as appropriate within the scope of the above spirit. The shape, size, number, material, and arrangement of each portion of the fusion splicer according to the present disclosure are not limited to the embodiments or modified examples described above, and can be changed as appropriate. The fusion splicer according to the present disclosure may be any combination of the embodiments, Modified Example 1, and Modified Example 2 described above.

For example, in the above-described embodiment, an example in which the optical fiber holder 10 is detachable from the holder stand 40 has been described. However, the optical fiber holder may not be detachable from the holder stand. Moreover, the fusion splicer may not have the holder stand 40. In this case, the fusion splicer may be a fusion splicer in which the optical fiber holder 10 is fixed to the rotation mechanism 20.

In the embodiments described above, an example is described in which the lid portion 73 and the bending portion 90 of the bending mechanisms 70 and 95 are provided with reflection portions. However, the fusion splicer may further include a reflection portion on the lid 13 or the V-groove 11 of the optical fiber holder 10. By providing the reflection portions in this portion, the leaked light from the optical fiber F can be allowed to be incident on the optical fiber F again, so that the end face can be illuminated more efficiently.

### Reference Signs List

1: fusion splicer, 2: discharge electrode, 3: control unit, 10: optical fiber holder, 10b: end portion, 11: V-groove, 12: stand, 12b: V-groove exposed portion, 13: lid, 15: pressure adjustment unit, 20: rotation mechanism, 20b: recess, 20c: outer peripheral surface, 30: clamp portion, 31: stand, 32: lid, 33: first extension portion, 34: second extension portion, 35: V-groove, 40: holder stand, 41: mounting surface, 50: bending portion, 51: convex surface, 51b: top, 55: bending adjustment unit, 60: light source, 61: power supply, 65: light source adjustment unit, 69: power supply unit, 70: bending mechanism, 71: support portion, 73: lid portion, 73b: surface, 74: reflection portion, 81: fusion splicer, 85: clamp portion, 86: fixing portion, 87: extension portion, 88: lid portion, 90: bending portion, 92: mounting portion, 93: bending adjustment unit, 95: bending mechanism, A: bending amount, F: optical fiber, F1: tip.

## Claims

1. A fusion splicer comprising:
an optical fiber holder holding an optical fiber;
a rotation mechanism rotating the optical fiber holder around an axis extending along the optical fiber;
a bending portion bending the optical fiber;
a light source allowing light from the side of the optical fiber to be incident on the optical fiber bent by the bending portion; and
a power supply unit supplying power to the light source,
wherein a tip of the optical fiber protrudes from an end of the optical fiber holder,
wherein the rotation mechanism is disposed on the opposite side of the end of the optical fiber holder in the axial direction extending along the optical fiber,
wherein the bending portion and the light source are disposed on the opposite side of the optical fiber holder interposing the rotation mechanism in the axial direction, and
wherein the bending portion includes a bending adjustment unit adjusting a bending amount of the optical fiber.

2. The fusion splicer according to claim 1, further comprising a light source adjustment unit adjusting power supplied to the light source.

3. The fusion splicer according to claim 1 or 2, wherein the optical fiber holder has a pressure adjustment unit adjusting pressure applied to the optical fiber.

4. The fusion splicer according to any one of claims 1 to 3, comprising a reflection portion reflecting light from the light source toward the optical fiber.

5. The fusion splicer according to any one of claims 1 to 4, further comprising a holder stand with the optical fiber holder mounted on;
wherein the optical fiber holder is detachable from the holder stand.
